# FASCICULE DE BREVET EUROPEEN

(11) **EP 1 309 812 B1**
(45) Date de publication et mention de la délivrance du brevet: **18.06.2008**
(21) Numéro de dépôt: 01960866.0
(22) Date de dépôt: 03.08.2001
(51) Int. Cl.: F16L 9/12, F16L 11/04, B32B 1/08, B32B 27/08

(54) **TUBE MULTICOUCHE EN MATIERE PLASTIQUE POUR FLUIDES UTILISES DANS LES VEHICULES AUTOMOBILES**
MEHRSCHICHTIGER KUNSTSTOFFSCHLAUCH FÜR IN KRAFTFAHRZEUGEN VERWENDETE FLÜSSIGKEITEN
MULTILAYER PLASTIC TUBE FOR FLUIDS USED IN MOTOR VEHICLES

(30) Priorité: 11.08.2000 FR 0010588
(43) Date de publication de la demande: 14.05.2003
(73) Titulaire: Nobel Plastiques, 78300 Poissy (FR)
(72) Inventeur: MIGUEL, Guillaume, Collège Guillaume de Concues, F-27190 Concues en Ouche (FR)
(74) Mandataire: Robert, Jean-Pierre
(86) Numéro de dépôt international: PCT/FR2001/002539
(87) Numéro de publication internationale: WO 2002/014727

(56) Documents cités:
- EP-A- 0 638 749
- DE-C- 3 821 723
- FR-A- 2 707 724
- FR-A- 2 708 075

## Description

La présente invention a pour objet un tube multicouche en matière plastique pour le transport de fluides dans un véhicule automobile, principalement le carburant.

Le remplacement des canalisations métalliques par des canalisations en matière plastique dans les véhicules automobiles se généralise pour des raisons évidentes de gain de poids entraînant des gains de consommation de carburant et par voie de conséquence une diminution de la pollution atmosphérique.

Les matériaux thermoplastiques actuellement sur le marché offrent une palette importante de propriétés, mais aucun matériau ne présente toutes les qualités requises au transport d'un carburant. C'est ainsi que certains d'entre eux ont d'excellentes propriétés barrière, mais de piètres propriétés mécaniques ou de résistance à l'inflammation. D'autres au contraire sont mécaniquement satisfaisants, mais tendent soit à se dissoudre dans le carburant soit à être perméables à son égard, ce qui conduit à une autre pollution atmosphérique. D'autres par ailleurs se prêtent difficilement aux opérations de formage qu'une conduite doit pouvoir subir pour être employée dans un véhicule automobile.

En outre, il se met en place, en matière de pollution et de sécurité à propos des véhicules automobiles, un arsenal de textes normatifs qui fixent des objectifs draconiens à atteindre dans les années à venir et stimulent ainsi une activité de recherche intense notamment dans le domaine des canalisations pour carburant.

La tendance actuelle est donc de réaliser des canalisations multicouches en matériau thermoplastique pour additionner les propriétés positives de chaque matériau afin d'obtenir un compromis acceptable capable de répondre de manière satisfaisante aux normes en vigueur ou à venir. A ces exigences techniques s'ajoute une exigence économique à savoir d'obtenir ce compromis au meilleur prix de revient.

Dans cette optique, l'invention a pour objet une canalisation en matériau thermoplastique multicouche dont la composition est, de l'intérieur vers l'extérieur:
- une couche de polyamide,
- une couche de copolymère polyéthylène - anhydride maléique,
- une couche de polyéthylène haute densité (PEHD),
- une couche de matériau élastomère à base de polyester-éther.

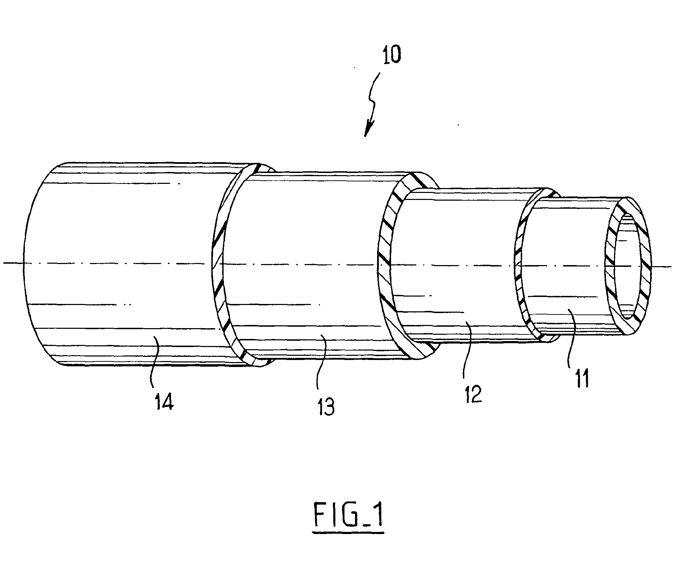

D'autres caractéristiques et avantages de l'invention apparaîtront plus clairement à la lumière de la description qui va suivre et du dessin annexé, concernant un mode de réalisation particulier, en référence à la figure 1 qui illustre en coupe étagée un tube multicouche conforme à l'invention.

Le tube multicouche, noté 10, comprend quatre couches successives, notées respectivement 11, 12, 13, 14 de l'intérieur vers l'extérieur dudit tube.

La couche interne 11 en polyamide présente une bonne compatibilité aux hydrocarbures (absence de réaction chimique ou de dissolution) et constitue en outre une barrière de bonne qualité aux composants contenus dans un carburant, et elle forme aussi une armature mécanique pour le tube. On choisira de préférence un PA6.

La couche 12 de copolymère polyéthylène-anhydride maléique est principalement utilisée pour ses propriétés de liaison permettant au polyamide d_{'}adhérer intimement avec la couche de polyéthylène haute densité (PEHD) qui forme la troisième couche 13.

Cette troisième couche 13 confère au tube 10 une propriété barrière efficace aux alcools contenus dans le carburant tout en renforçant également la tenue mécanique dudit tube.

La dernière couche enfin, couche externe notée 14, est constituée de copolymère polyester-éther à propriétés élastomériques. Cette couche forme une protection du tube 10 contre les fluides occasionnels avec lesquels il peut être mis en contact (huile, eau chargée de divers sels, notamment en hiver, ...) et elle apporte une protection contre les chocs et résiste bien aux contraintes de flexion et de fatigue en flexion que peut subir le tube, ce grâce à son caractère élastomère. En outre cette dernière couche résiste bien aux blessures et à l'abrasion.

La somme de ces propriétés permet de réaliser un tube milticouche dont la paroi est d'épaisseur relativement faible c'est-à-dire, selon son diamètre, une épaisseur totale comprise entre 0,6 millimètre et 1,5 millimètre, avec une répartition de cette épaisseur par couche individuelle à raison de 0,2 à 0,5 millimètre pour la couche interne 11, 0,1 millimètre pour la couche de liaison 12, 0,2 à 0,5 millimètre pour la couche 13 de PEHD et enfin 0,1 à 0,4 millimètre pour la couche externe 14.

Une matière possible pour la couche externe 14 est mise sur le marché sous le nom commercial d'ARNITEL (marque enregistrée de la société DMS).

On obtient ainsi un tube multicouche satisfaisant à la réglementation EURO 2000 avec un poids minimum de matière.

En outre, les matériaux employés sont relativement bon marché ce qui permet une fabrication économique du tube.

Enfin ces matériaux se prêtent à une fabrication soit par coextrusion des quatre couches 11, 12, 13, 14, soit par coextrusion des trois couches internes 11, 12, 13 et application ultérieure d'un revêtement élastomère sur l'ensemble coextrudé.

## Revendications

1. Tube en matière plastique (10) pour le transport d'un fluide de véhicule automobile tel que du carburant, **caractérisé en ce qu'**il possède une structure multicouche comprenant, de l'intérieur vers l'extérieur :
- une couche interne (11) en polyamide,
- une couche de liaison (12) formée d'un copolymère de polyéthylène et d'anhydride maléique,
- une couche (13) de polyéthylène haute densité (PEHD),
- une couche externe (14) de copolymère polyester-éther à propriétés élastomériques.

2. Tube selon la revendication 1, **caractérisé en ce qu'**il possède une épaisseur totale de paroi comprise entre 0,6 millimètre et 1,5 millimètre répartis
- pour la couche interne (11), entre 0,2 et 0,5 millimètre,
- pour la couche de liaison (12), 0,1 millimètre,
- pour la couche (13) de polyéthylène haute densité, entre 0,2 et 0,5 millimètre,
- pour la couche externe (14), entre 0,1 et 0,4 millimètre.

3. Tube selon l'une quelconque des revendications précédentes, **caractérisé en ce que** le polyamide constitutif de la couche interne (11) est un PA6 et **en ce que** le polyester-éther constitutif de la couche externe (14) est un produit mis sur le marché sous la marque enregistrée ARNITEL.

## Claims

1. A hose (10) made of plastics material, for conveying a motor vehicle fluid such as fuel, the hose being **characterized in that** it possesses a multilayer structure comprising, from the inside to the outside:
an inner layer (11) made of polyamide;
a connecting layer (12) formed of a copolymer of polyethylene and maleic anhydride;
a layer (13) of high density polyethylene (HDPE); and
an outer layer (14) of polyester-ether copolymer having elastomeric properties.

2. A hose according to claim 1, **characterized in that** it has a total wall thickness lying in the range 0.6 mm to 1.5 mm, distributed as follows:
the inner layer (11) lies in the range 0.2 mm to 0.5 mm;
the connecting layer (12) is 0.1 mm;
the layer (13) of high density polyethylene lies in the range 0.2 mm to 0.5 mm; and
the outer layer (14) lies in the range 0.1 mm to 0.4 mm.

3. A hose according to any preceding claim, **characterized in that** the polyamide constituting the inner layer (11) is a PA6, and **in that** the polyester-ether constituting the outer layer (14) is a product put on the market under the registered trademark ARNITEL.

## Patentansprüche

1. Kunststoffschlauch (10) für den Transport eines Kraftfahrzeugsfluids, wie z. B. Kraftstoff, **dadurch gekennzeichnet, dass** er eine mehrschichtige Struktur aufweist, die von innen nach außen umfasst:
- eine Innenschicht (11) aus Polyamid,
- eine Verbindungsschicht (12), die aus einem Polyethylen-Copolymer und einem Maleinsäureanhydrid gebildet ist,
- eine Schicht (13) aus Polyethylen hoher Dichte (PEHD),
- eine Außenschicht (14) aus Polyester-Ether-Copolymer mit elastomeren Eigenschaften.

2. Schlauch nach Anspruch 1, **dadurch gekennzeichnet, dass** er eine Gesamtwandstärke zwischen 0,6 Millimeter und 1,5 Millimeter hat, die wie folgt verteilt sind:
- zwischen 0,2 und 0,5 Millimeter für die Innenschicht (11),
- 0,1 Millimeter für die Verbindungsschicht (12),
- zwischen 0,2 und 0,5 Millimeter für die Schicht (13) aus Polyethylen hoher Dichte,
- zwischen 0,1 und 0,4 Millimeter für die Außenschicht (14).

3. Schlauch nach einem der vorhergehenden Ansprüche, **dadurch gekennzeichnet, dass** das die Innenschicht (11) bildende Polyamid ein PA6 ist und dass das die Außenschicht (14) bildende Polyester-Ether ein Produkt ist, das unter der eingetragenen Marke ARNITEL auf den Markt gebracht wurde.
